Europäisches Patentamt

**European Patent Office**

Office européen des brevets

(19)

(11) Publication number : **0 388 530 B1**

(12)

# EUROPEAN PATENT SPECIFICATION

(45) Date of publication of patent specification :
**28.10.92 Bulletin 92/44**

(51) Int. Cl.⁵ : **G01C 19/72**

(21) Application number : **89200685.9**

(22) Date of filing : **20.03.89**

(54) **Fibre-optic gyroscopes.**

(43) Date of publication of application :
**26.09.90 Bulletin 90/39**

(45) Publication of the grant of the patent :
**28.10.92 Bulletin 92/44**

(84) Designated Contracting States :
**DE FR**

(56) References cited :
**EP-A- 0 153 123**
**GB-A- 2 108 652**
**GB-A- 2 134 248**
**GB-A- 2 178 162**

(73) Proprietor : **BRITISH AEROSPACE PUBLIC LIMITED COMPANY**
**Warwick House, P.O. Box 87, Farnborough Aerospace Centre**
**Farnborough, Hants. GU14 6YU (GB)**

(72) Inventor : **Varnham, Malcolm P. British Aerospace Public**
**Limited Company (Dynamics) Ltd Six Hills Way**
**Stevenage Herts, SG1 2AS (GB)**

(74) Representative : **Dowler, Edward Charles et al**
**British Aerospace plc, Corporate Intellectual Property Department, Park East, PO Box 87, Farnborough Aerospace Centre**
**Farnborough,Hants GU14 6YU (GB)**

## Description

A fibre-optic gyroscope may comprise a light source, a beam splitting and combining arrangement, a coil of optical fibre, one or more phase modulators, a light detector and an electronics unit including a demodulator which demodulates the signal produced by the detector in order that a signal may be derived which is dependent upon the non-reciprocal phase changes of the light in the coil and hence upon rotation of the coil.

These components may be arranged in different ways and adapted to form open and closed loop gyroscope types with a variety of modulation and demodulation techniques. In the closed loop type of gyroscope the signal from the demodulator so controls a phase modulator that the non-reciprocal phase changes experienced by the light are cancelled out or "nulled". In the open loop schemes, any non-reciprocal phase variation induced by rotation of the coil is not nulled but simply measured by monitoring the demodulator output. Patent Specification No. GB-A-2134248 discloses a fibre optic gyroscope having a fibre optic coil connected via first and second electro-optical phase modulators and beam splitting and combining means to a light source and detector. Light from the source is split into two components which are sent in opposite directions around the coil and then recombine to form an interference pattern at the detector. The first modulator induces a cyclic variation of relative phase of the recombined light components and consequently amplitude modulation of the detector signal dependent upon the rotation rate of the coil. The second modulator so modulates the phase of the light components in dependence upon the detector signal that the rotation induced effect which produces the amplitude modulation is cancelled, ie the gyroscope is of the closed loop phase-nulling type mentioned above. The first modulator is fed with a modulation signal at a frequency equal to the reciprocal of twice the time taken for the light to pass through the fibre optic coil while the second modulator is operated at half this frequency. The detector output is sampled and hence demodulated in synchronism with the modulation signal fed to the first modulator.

A limiting factor in all these arrangements is the apparent rotation rate (drift) caused by offsets in the demodulator. This drift can be reduced by increasing the gain in front of the demodulator, however there are practical limits such as saturation of the amplifier and demodulator. The difficulties are further increased since the rate of demodulation is typically in the range of 100KHz to 10 MHz. These frequencies are high and consequently it is difficult to design the demodulator to have a sufficiently low offset voltage.

Accordingly one object of the present invention is to provide a system which reduces the sensitivity of the gyro to offsets in the demodulator.

According to the present invention there is provided a fibre optic gyroscope comprising a coil of optical fibre coupled by way of beam splitting and combining means to a light source and a light detector such that components of the light from the source are propagated in opposite directions around the coil and then combined interferometrically and passed to the detector, the gyroscope further comprising phase modulating means for modulating the relative phase of the light components at two different frequencies such that the intensity of the light received by the detector is modulated at the higher of the said two frequencies with the modulation amplitude dependent upon rotation of said coil, and demodulation means being coupled to the light detector for demodulating the detector output signal, characterised in that the demodulation means comprises a first synchronous demodulator for demodulating the output signal from the detector in synchronism with the modulation at the higher of said two different frequencies, and a second synchronous demodulator for demodulating the signal from the first demodulator in synchronism with the phase modulation at the lower of said two different frequencies.

Reference will now be made by way of example to the accompanying diagrams in which:-

Figure 1 is a block diagram of a fibre-optic gyroscope system scheme utilising a double demodulation process according to a first embodiment of the present invention;

Figure 2 is a diagram of the interference fringe modulating waveforms and detector signals for zero negative and positive base imbalances for the Figure 1 system;

Figure 3 is a number of graphs of typical signals in the system of figure 1; and

Figure 4 is a block diagram of a gyroscope utilising a double demodulation process according to a 2nd embodiment of the invention.

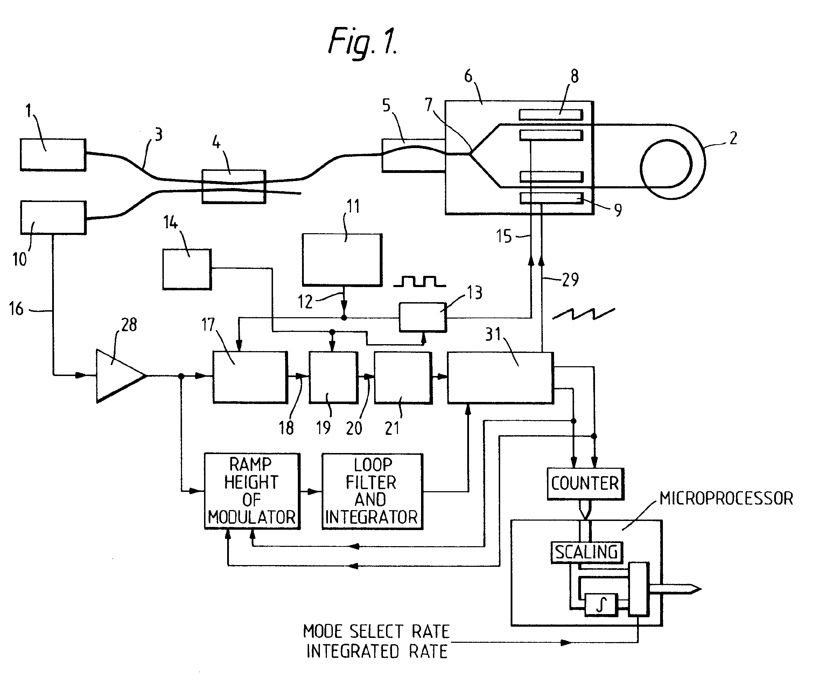

Referring to Figure 1 of the accompanying drawings, light from an edge-emitting light emitting diode (ELED) source 1 is passed to an optic fibre coil 2 via optic fibre 3, a fibre-optic coupler 4, polariser 5, an integrated optics coupler (Y-junction) 7, two phase modulators 8 and 9. The light is split into two beams at the coupler 7, which beams pass via respective ones of the modulators 8 and 9, then in respective opposite directions around coil 2, and then back to the coupler 7 where they recombine and where interference takes place. The recombined beams are then passed back to a detector 10 via the polariser 5 and fibre-optic coupler 4. As variations of what is shown in Figure 1, the integrated optics device 6 could comprise only the modulators 8 and 9, the coupler 7 being then implemented as a separate discrete component between the device 6 and the polariser 5. Alternatively it could incorporate the modulators 8 and 9 and the coupler 7 and in addition one or both of the polariser 5 and coupler 6. In the case of a III-V semi-conductor integrated optic device, the device could even incorporate the source and the detector.

The fibre coupler 4 may be a fused biconical-taper coupler made from conventional fibre. The polariser 5 may be based on a glass/metal design and may comprise a monomode fibre core, near to which is placed Indium Gallium in a D-Shaped hole within the fibre substrate. The integrated optics may be made from Lithium Niobate and may have two phase modulator sections. A high-birefringence fibre may be used in the coil which is 200m long. The integrated optics may be polarisation maintaining.

Similar gyros may also be constructed with a coil made from a depolariser and conventional fibre.

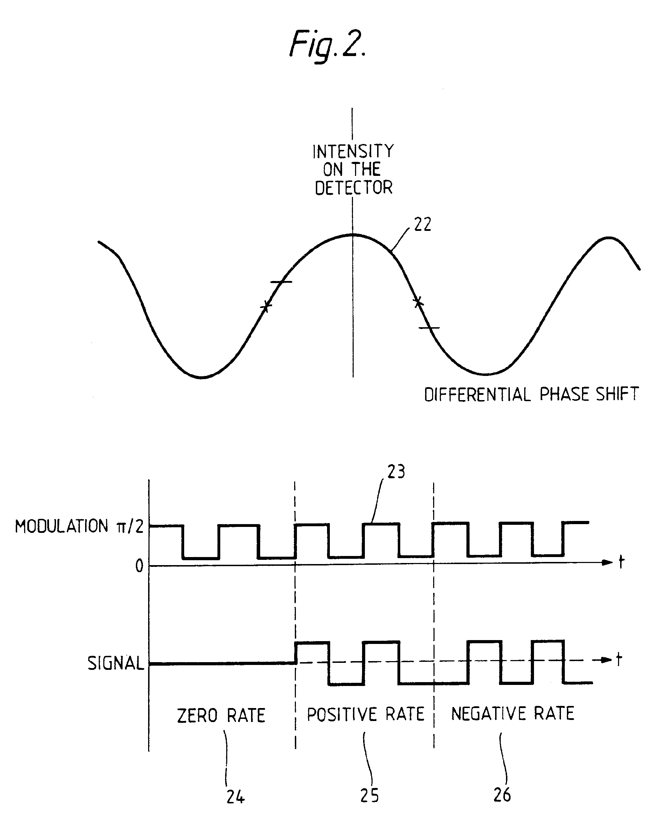

The phase imbalance in the gyro between the counterpropagating waves is measured by modulating the phase of the light in the coil with a signal 15, in a manner which will be explained below. Figure 2 shows a diagram of the interference fringe 22, the modulating waveform 23 and the detector signals for zero, negative and positive phase imbalances 24, 25 and 26 respectively in the absence of a chopper signal 14A (whose function will become apparent below). The resulting signal on the detector 10 has a component at the modulation frequency which for small errors is proportional to the phase imbalance around the coil.

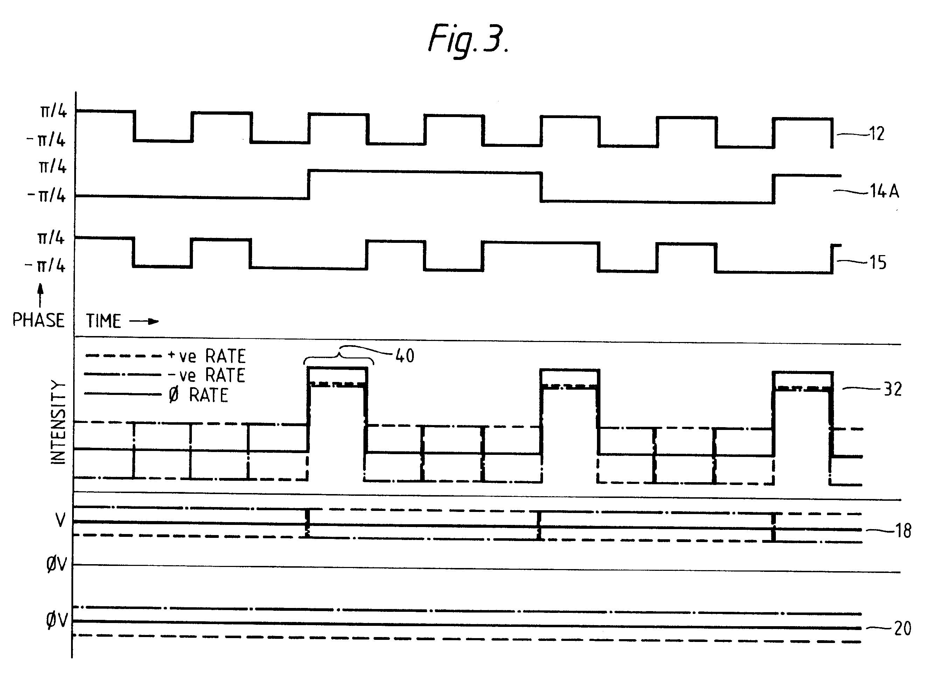

The phase modulator 8 is driven by a square wave signal 12 from a generator 11, the signal having a frequency $^1/_{2T}$, where T is the time taken for light to pass around coil 2, and having an amplitude such as to produce a phase shift of plus and minus $\pi/4$ of the light passing through the modulator. The signal 12 is then passed into a phase inverter 13 where it is inverted in phase synchronously with a chopper signal 14A from generator 14, signal 14A has a frequency lower than that of signal 12. The resultant signal 15 and signals 12 and 14A are shown in Figure 3. The signal is passed into modulator 8 in the gyro optics 6 of the system.

The detector output signal 16 is demodulated by a rate demodulator 17 in a known manner.

The signal 18 from the rate demodulator generally contains a wave signal whose amplitude is a measure of any non-reciprocity occurring in the gyroscope and a relatively high DC offset of which a part, at least will be due to the offsets in the rate demodulator. The signal is shown for zero, negative and positive rotation rates of the gyroscope in figure 3. Signal 18 is then demodulated at the lower chop frequency (as generated by the chopper 14) by a second demodulator 19. Since demodulator 19 is operating at a lower frequency it can be designed to have a relatively smaller DC offset than that of demodulator 8, but without seriously increasing the cost of its production. Hence the output 20 from demodulator 19 will have smaller offset. Figure 3 shows a typical signal 20 for zero , negative and positive, rotation rates of the gyroscope. This signal 20 may then be introduced via suitable filter means 21 to a serrodyne voltage controlled oscillator (VCO) 31. This then generates a sawtooth signal 29 whose slope varies in order to adjust any phase imbalance adjusts until this phase imbalance around the coil is nulled. The amplitude of the serrodyne is controlled to $2m\pi$ where m is an integer.

The rate and amplitude control loops 30 control the slope of the serrodyne signal 29 and its height. Consequently the frequency of the signal is proportional to rate and the gyroscope output can be obtained by summing the number of positive and negative resets in the VCO. These are counted, scaled, and output to the user as either incremental angle or rate.

The output of the gyro is the frequency of the serrodyne VCO which is ideally linearly proportional to rotation rate (note negative frequencies are defined as having a negative sawtooth slope, whereas positive frequencies have a positive slope).

The detector waveform 16 includes a periodic signal 32 as shown in Figure 3 which is produced when the chopper inverts the phase signal 12. The amplitude of the signal is an indication of the power on the detector and can be used in a feedback loop to adjust either the gain of amplifier 28 or the source power to maintain a constant output level. It should be noted that demodulation is inhibited during period 40 in any known manner.

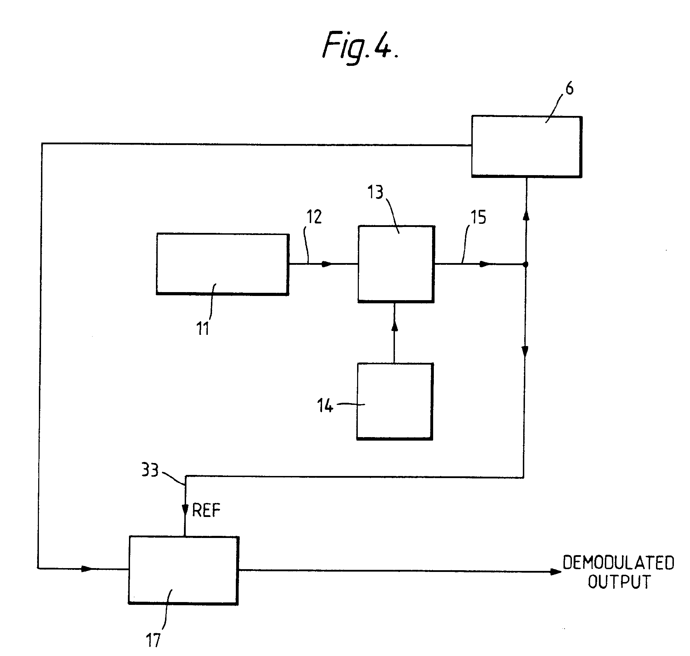

A second embodiment of the invention shown in Figure 4, is a simplification of the first embodiment because the phase of the signal 12 is varied synchronously with the chopper signal 14A, but so is a reference signal 33 to the rate demodulator 17

This second embodiment may not work as well as the first and is thus not the preferred embodiment.

There are many variations on the above first embodiment. For example, the rate demodulator output can be amplified and then a.c. coupled. This has the advantage that the amplification before the second demodulator will reduce the effects of offsets arising from the first demodulator without the penalties of saturation, because of the reduced bandwidth of the signals at the rate demodulator output. In addition, the a.c coupling may help the second demodulator to reject the unwanted DC components from the first demodulator by ensuring that the input to the second demodulator has an average value of exactly zero.

The double demodulation process can be implemented digitally if an analogue to digital converter is placed in front of the first demodulator. Alternatively, an analogue to digital converter could be placed in front of the second demodulator. In the latter case, the first demodulation would be carried out using analogue electronics, while the second demodulation would be carried out using digital electronics.

The double demodulation process would be applicable to both closed and open loop schemes where the gyro is modulated. The additional modulation signal 14A could be at a fixed frequency, variable frequency pseudo-random frequency or random frequency. The primary modulating waveform applied to the gyro (signal 15) could be square, sinusoidal or any other shape.

It should be noted that the first described embodiment is the preferred embodiment but not the only embodiment.

## Claims

1. A fibre optic gyroscope comprising a coil of optical fibre coupled, by way of beam splitting and combining means, to a light source and a light detector such that components of the light from the source are propagated in opposite directions around the coil and then combined interferometrically and passed to the detector, the gyroscope further comprising phase modulating means for modulating the relative phase of the light components at two different frequencies such that the intensity of the light received by the detector is modulated at the higher of the said two frequencies with the modulation amplitude dependent upon rotation of said coil, and demodulation means being coupled to the light detector for demodulating the detector output signal, characterised in that the demodulation means comprises a first synchronous demodulator (17) for demodulating the output signal (16) from the detector (10) in synchronism with the modulation at the higher of said two different frequencies, and a second synchronous demodulator (19) for demodulating the signal (18) from the first demodulator in synchronism with the phase modulation at the lower of said two different frequencies.

2. A fibre optic gyroscope according to claim 1, wherein the phase modulating means is operable to modulate the relative phase of said light components at the said higher frequency and periodically to invert the phase of this modulation at the lower of said two frequencies.

3. A fibre optic gyroscope according to claim 2, wherein the modulating means comprises an electro-optical phase modulator (8), controllable signal inverting means (13) having a signal output coupled to an electrical signal input of the electro-optical phase modulator, and modulation signal supply means (11 and 14) for supplying a first modulation signal (12) having said higher frequency to a signal input of the inverting means (13) and to a control input of the first synchronous demodulator (17) and for supplying a second modulation signal (14A) having said lower frequency to a control input of the inverting means and to a control input of the second synchronous demodulator (19).

4. A fibre optic gyroscope according to claim 3, wherein the first modulation signal (12) has a rectangular waveform and a frequency substantially equal to the reciprocal of twice the time taken for said light to pass through the said coil.

5. A fibre optic gyroscope according to any preceding claim, comprising a feedback loop including control means (21, 31, 9) for causing the phase of the light to be modulated in dependence upon the output from the demodulation means so as to null phase difference effects produced by rotation of the coil.

## Patentansprüche

1. Faseroptischer Kreisel mit einer Spule aus einer optischen Faser, die über einen Strahlenteiler und eine Strahlenkombinationseinrichtung derart an eine Lichtquelle und einen Lichtdetektor angekoppelt sind, daß Komponenten des Lichtes von der Lichtquelle in Gegenrichtung durch die Spule laufen und dann dann interferrometrisch kombiniert und dem Detektor zugeführt werden, wobei der Kreisel außerdem einen Phasenmodulator besitzt, um die relative Phase der Lichtkomponenten bei zwei unterschiedlichen Frequenzen derart zu modulieren, daß die Intensität des Lichts, die vom Detektor empfangen wird, bei der höheren der beiden Frequenzen moduliert wird, mit der Modulationsamplitude, die von der Drehung der Spule abhängt und wobei ein Demodulator mit dem Lichtdetektor gekoppelt ist, um das Detektorausgangssignal zu demodulieren, dadurch gekennzeichnet, daß die Demodulationseinrichtung einen ersten Synchron-Demodulator (17) aufweist, um das Ausgangssignal (16) des Detektors (10) synchron zur Modulation mit der höheren der beiden unterschiedlichen Frequenzen zu demodulieren, während ein zweiter Synchron-Demodulator (19) das Signal (18) vom ersten Demodulator synchron zur Phasenmodulation bei der unteren der beiden unterschiedlichen Frequenzen demoduliert.

2. Faseroptischer Kreisel nach Anspruch 1, bei welchem die Phasenmodulationseinrichtung die relative Phase der Lichtkomponenten bei der höheren Frequenz moduliert und periodisch die Phase dieser Modulation mit der unteren der beiden Frequenzen invertiert.

3. Faseroptischer Kreisel nach Anspruch 2, bei welchem die Modulationsmittel einen elektrooptischen Phasenmodulator (8), einen steuerbaren Signalinverter (13) mit einem Signalausgang, der an einen elektrischen Signaleingang des elektrooptischen Phasenmodulators angekoppelt ist und eine Modulationssignalquelle (11 und 14) aufweist, um ein erstes Modulationssignal (12) mit der höheren Frequenz einem Signaleingang des Inverters (13) und einem Steuereingang des ersten Synchrondemodulators (17) zuzuführen und um ein zweites Modulationssignal (14A) mit der niedrigeren Frequenz einem Steuereingang des Inverters und einem Steuereingang des zweiten Synchrondemodulators (19) zuzuführen.

4. Faseroptischer Kreisel nach Anspruch 3, bei welchem das erste Modulationssignal (12) eine Rechteckwellenform und eine Frequenz besitzt, die im wesentlichen gleich ist dem Reziprokwert der zweifachen Zeit, die das Licht benötigt um durch die Spule zu laufen.

5. Faseroptischer Kreisel nach einem der vorhergehenden Ansprüche, welcher eine Rückführungsschleife mit einer Steuereinrichtung (21, 31, 9) aufweist, um die Lichtphase zu veranlassen, sich in Abhängigkeit vom Ausgang des Demodulators zu modulieren, so daß Null-Phasendifferenzwirkungen durch Drehung der Spule erzeugt werden.

## Revendications

1 - Gyroscope à fibre optique comprenant une bobine de fibre optique accouplée, par l'intermédiaire d'un moyen de fractionnement et de combinaison de faisceau, à une source lumineuse et à un détecteur de lumière de sorte que des composantes de la lumière provenant de la source se propagent dans des sens opposés autour de la bobine et sont alors combinées interférométriquement et transmises au détecteur, le gyroscope comportant en outre un moyen de modulation de phase pour moduler la phase relative des composantes de la lumière à deux fréquences différentes de façon que l'intensité de la lumière reçue par le détecteur soit modulée à la plus élevée desdites deux fréquences avec l'amplitude de la modulation dépendant de la rotation de ladite bobine, et un moyen de démodulation étant accouplé au détecteur de lumière afin de démoduler le signal sortant du détecteur, caractérisé en ce que le moyen de démodulation comprend un premier démodulateur synchrone (17) pour démoduler le signal (16) sortant du détecteur (10) en synchronisme avec la modulation à la plus élevée desdites deux fréquences différentes, et un second démodulateur synchrone (19) pour démoduler le signal (18) provenant du premier démodulateur en synchronisme avec la modulation de phase à la plus basse desdites deux fréquences différentes.

2 - Gyroscope à fibre optique selon la revendication 1, dans lequel le moyen de modulation de phase peut fonctionner pour moduler la phase relative desdites composantes de la lumière à ladite fréquence plus élevée et périodiquement pour inverser la phase de cette modulation à la plus basse desdites deux fréquences.

3 - Gyroscope à fibre optique selon la revendication 2, dans lequel le moyen de modulation comprend un modulateur de phase électro-optique (8), un moyen d'inversion de signal contrôlable (13) ayant une sortie de signal accouplée à une entrée de signal électrique du modulateur de phase électro-optique, et des moyens de fourniture de signal de modulation (11 et 14) pour fournir un premier signal de modulation (12) ayant ladite fréquence plus élevée à une entrée de signal du moyen d'inversion (13) et à une entrée de commande du premier démodulateur synchrone (17) et pour fournir un second signal de modulation (14A) ayant ladite fréquence plus basse à une entrée de commande du moyen d'inversion et à une entrée de commande du second démodulateur synchrone (19).

4 - Gyroscope à fibre optique selon la revendication 3, dans lequel le premier signal de modulation (12) a une forme d'onde rectangulaire et une fréquence sensiblement égale à la réciproque du double du temps mis par ladite lumière pour passer dans ladite bobine.

5 - Gyroscope à fibre optique selon l'une quelconque des revendications précédentes, comprenant une boucle de réaction comportant un moyen de commande (21, 31, 9) pour que la phase de la lumière soit modulée en fonction de la sortie du moyen de démodulation de façon à annuler les effets de la différence de phase produits par la rotation de la bobine.

Fig.1.

# Fig.2.

Fig.3.

EP 0 388 530 B1

*Fig.4.*

DEMODULATED
OUTPUT